Europäisches Patentamt

European Patent Office

Office européen des brevets

(19)

(11) EP 0 485 584 B1

(12) **EUROPÄISCHE PATENTSCHRIFT**

(45) Veröffentlichungstag und Bekanntmachung des Hinweises auf die Patenterteilung:
**07.01.1998 Patentblatt 1998/02**

(21) Anmeldenummer: **91911232.6**

(22) Anmeldetag: **12.06.1991**

(51) Int Cl.6: **G01N 27/00**

(86) Internationale Anmeldenummer:
**PCT/EP91/01093**

(87) Internationale Veröffentlichungsnummer:
**WO 91/19972 (26.12.1991 Gazette 1991/29)**

(54) **Verfahren zur Untersuchung beschichteter Metalloberflächen**

Process for inspectung coated metal surfaces

Procede pour l'examen de surfaces metalliques pourvues d'un revetement

(84) Benannte Vertragsstaaten:
**AT BE CH DE DK ES FR GB GR IT LI LU NL SE**

(30) Priorität: **13.06.1990 DE 4018993**

(43) Veröffentlichungstag der Anmeldung:
**20.05.1992 Patentblatt 1992/21**

(73) Patentinhaber: **Max-Planck-Institut für Eisenforschung GmbH**
**D-40237 Düsseldorf (DE)**

(72) Erfinder:
- **STRATMANN, Martin**
  **D-4005 Meerbusch 2 (DE)**
- **STRECKEL, Heinz**
  **D-4020 Mettmann (DE)**

(74) Vertreter: **von Bezold, Dieter, Dr. et al**
**Dr. Dieter von Bezold**
**Dipl.-Ing. Peter Schütz**
**Dipl.-Ing. Wolfgang Heusler**
**Brienner Strasse 52**
**80333 München (DE)**

(56) Entgegenhaltungen:
**FR-A- 2 346 834          FR-A- 2 607 935**
**US-A- 4 072 896**

- **JOURNAL OF PHYSICS E/SCIENTIFIC INSTRUMENTS, Band 21, Nr. 7, Juli 1988, Seiten 674-679, IOP Publishing Ltd, (Bristol, GB), J.M. PALAU et al.: "Réalisation d'une sonde de Kelvin performante pour l'étude topographique du travail de sortie"**

## Beschreibung

Die vorliegende Erfindung betrifft ein Verfahren zum Untersuchen des Zustandes einer Metalloberfläche, die mit einer Beschichtung, insbesondere aus einem dielektrischen Material, wie einem Polymer, versehen ist.

Polymerbeschichtungen von reaktiven Metalloberflächen kommt eine zunehmend größere technische Bedeutung zu. Sie dienen zum Schutz von Gebrauchsmetallen wie Eisen, Zink oder Aluminium gegen Korrosion, dienen als isolierende Deckschicht mit besonderen dielektrischen Eigenschaften bei elektronischen Bauteilen oder weisen besondere konstruktive Eigenschaften wie im Falle von Klebstoffen auf.

Die technischen Anforderungen an derartige Verbundsysteme von Beschichtungen, insbesondere Polymeren, auf metallischen Substraten, sind eine hohe mechanische Stabilität der Phasengrenze sowie ein hoher Korrosionsschutz des Substrats gegenüber aggressiven Medien durch die aufgebrachte Beschichtung. Das Versagen des Verbundes von Metall und Beschichtung beruht sehr häufig auf der Diffusion von Bestandteilen korrosiver Medien durch die Beschichtung, der Anreicherung von Wasser und Ionen an der Phasengrenze Metall/Beschichtung in zunächst monomolekularen und dann dreidimensional dicken Filmen, der dadurch möglichen Ausbildung einer elektrochemischen Doppelschicht, der folgenden Korrosionsreaktionen und schließlich der durch die elektrochemische Reaktion bedingten großflächigen Enthaftung der Beschichtung. Prinzipiell können Bestandteile eines korrosiven Mediums sowohl durch die Beschichtung zur Phasengrenze Substrat/ Beschichtung diffundieren, sie können aber auch entlang lokaler Fehlstellen, z.B. Poren oder örtlichen Verletzungen direkt an das lokal ungeschützte Metall gelangen und sich von dort entlang der Phasengrenze ausbreiten. Eine solche Unterwanderung und Enthaftung, die von lokalen Fehlstellen und Verletzungen ausgeht, ist von besonderer Bedeutung. Es ist unzweifelhaft, daß bei diesem Prozeß elektrochemische Reaktionen der Phasengrenze zwischen Metall und Beschichtung von ausschlaggebender Bedeutung sind und daß z.B. eine kathodische Polarisation der Phasengrenze die Delaminationsgeschwindigkeit beträchtlich beschleunigt. Es ist auch bekannt, daß die Geschwindigkeit der elektrochemischen Reaktionen von der Diffusion von Ionen durch die Beschichtung, wie einen Polymerfilm, stark bestimmt ist. Schließlich ist es bekannt, daß Reaktionen in anorganischen Konversionsschichten in bestimmten Fällen ursächlich für den Haftungsverlust der Beschichtung sind.

Die technische Bedeutung der Unterwanderung von Beschichtungen, insbesondere Polymerfilmen, spiegelt sich auch in zahlreichen industriellen Korrosionstests wieder, in denen sehr häufig die Unterwanderung ausgehend von einer mechanischen Beschädigung nach einer korrosiven Belastung am freien Korrosionspotential (Salzsprühtest usw.) oder während einer kathodischen Polarisation (potentiostatischer oder galvanostatischer Halteversuch) ausgemessen wird. Diese Untersuchungen stellen die Basis für die Entwicklung neuer Beschichtungsverfahren oder Beschichtungswerkstoffe dar. Es ist allerdings äußerst schwierig, die Unterwanderungsgeschwindigkeit direkt und in möglichst kurzer Zeit zu bestimmen.

Die bisher verwendeten Verfahren sehen vor, die unterwanderte Strecke optisch zu bestimmen (Auszählen von Blasen, Bildung von Rost) oder den enthafteten Lack mechanisch durch Abkratzen bzw. durch aufgeklebte Streifen zu entfernen. Nachteilig ist, daß die Auswertung bei diesen beiden bekannten Verfahren nicht frei ist von Willkür; die Verfahren erlauben keine kontinuierliche Verfolgung der Enthaftungsgeschwindigkeit; die mechanische Prüfung der Enthaftung ist nicht zerstörungsfrei und schließlich sind beide Verfahren nur dann anwendbar, wenn bereits eine beachtliche Zerstörung der Phasengrenze Metall/Beschichtung stattgefunden hat. Kurzzeitprüfungen mit hoher Ortsauflösung sind daher nicht möglich.

Elektrochemische Verfahren zur Untersuchung der Delaminationsgeschwindigkeit, z.B. Impedanzspektroskopie, sind ebenfalls bekannt, sie liefern jedoch bisher keine eindeutigen Ergebnisse.

Die Bildung von enthafteten Zonen unterhalb einer intakten Polymerschicht, d.h. weit entfernt von einer Verletzung, ist bisher nur mit Hilfe des Ultraschallmikroskops möglich. Dieses Verfahren ist jedoch sehr aufwendig und eignet sich schlecht für Fälle, bei denen das Substrat mit Mehrfachschichten beschichtet ist, wie dies bei modernen Beschichtungssystemen häufig der Fall ist.

Der vorliegenden Erfindung liegt dementsprechend, ausgehend von diesem Stand der Technik, die Aufgabe zugrunde, ein Verfahren und eine Einrichtung zum Untersuchen des Zustandes einer mit einem festen dielektrischen Material, typischerweise einem Polymer oder Kunststoff beschichteten, nicht direkt zugänglichen Metalloberfläche anzugeben, welche schon sehr geringe Veränderungen der Metalloberfläche, wie die ersten Anfänge von Korrosionsprozessen, schnell und reproduzierbar festzustellen gestattet.

Diese Aufgabe wird erfindungsgemäß durch ein Verfahren gelöst, bei dem das Korrosionspotential zwischen der Metalloberfläche und einer Bezugselektrode, insbesondere einer Kelvin-Sonde, berührungslos gemessen wird.

Das Verfahren gemäß der Erfindung ermöglicht die Messung von Korrosionspotentialen unterhalb von Beschichtungen, wie Polymerfilmen, mit hoher Ortsauflösung sowie schnell und reproduzierbar.

Das Prinzip der verwendeten Kelvin-Sonde ist seit langem bekannt und wurde in der Vergangenheit in erster Linie zur Messung von Austrittspotentialen verwendet: Werden zwei verschiedene Metalle leitend miteinander verbunden, so fließen Elektronen vom einen Metall in das andere, bis ein Ausgleich des Fermi-niveaus stattgefunden hat. Durch den Elektronenübergang wird eine Volta-Potentialdifferenz zwischen beiden Metallen erzeugt. Läßt man nun das eine Metall in Bezug auf das andere schwingen, so resultiert bei konstanter Volta-Potentialdifferenz ein Wechselstrom in der leitenden Verbindung zwischen den beiden Metallen, da sich mit der Schwingung die Kapazität zwischen beiden Metallen ändert. Wird eine zusätzliche Spannungsquelle zwischen beide Metalle geschaltet, so können die Fermi-Niveaus derart verschoben werden, daß in den Metallen keine Überschußladung mehr vorhanden ist. Dann ist der Wechselstrom gleich Null und der Betrag der angelegten Spannung gleich der Volta-Potentialdifferenz.

Es ist auch schon bekannt, Korrosionspotentiale von im wesentlichen freien Metalloberflächen mittels einer Kelvin-Sonde zu messen (Ber. Bunsenges. Phys. Chem. 92, 1244-1250 (1988)). Bei der vorliegenden Erfindung wird mit dieser Technik nicht das Austrittspotential eines Metalls oder das Korrosionspotential an einer im wesentlichen freien Metalloberfläche sondern das Elektrodenpotential an der Phasengrenze Metall/Beschichtung unterhalb einer dielektrischen Beschichtung gemessen. Über die mit Hilfe einer Kelvin-Sonde gemessene Volta-Potentialdifferenz läßt sich das Elektrodenpotential bzw. das Korrosionspotential an einer nicht direkt zugänglichen, mit einer festen dielektrischen Beschichtung überzogenen Metalloberfläche errechnen, wenn über Eichmessungen mit normalen Metall/Metallion-Referenzelektroden das Austrittspotential des Referenzmetalls und das Dipol-Potential an der Phasengrenze Elektrolyt/Gas ermittelt wurde. Dies ist in der Praxis ohne größere Schwierigkeiten möglich.

Das vorliegende Verfahren bietet also u.a. folgende Vorteile:

Sie erlauben eine zerstörungsfreie Untersuchung von Korrosionsprozessen unterhalb intakter Polymerfilme.

Sie erlauben eine kontinuierliche Verfolgung der Unterwanderung und Delamination von dielektrischen Beschichtungen, insbesondere Polymerfilmen ohne die Korrosionsreaktion zu stören.

Sie ermöglichen eine Kurzzeitprüfung, da die Unterwanderung mit hoher örtlicher Auflösung bestimmbar und daher frühzeitig zu erkennen ist.

Sie erlauben eine quantitative Untersuchung der Delamination von Polymerfilmen, die frei ist von Willkür.

Sie erlauben Korrosionsschäden unterhalb intakter Polymerfilme in einem sehr frühen Stadium zu erkennen; lange bevor eine optische Beobachtung Schäden erkennen läßt.

Folgende praktische Anwendungen sind u.a. möglich:

Untersuchung der Unterwandung von Lackfilmen ausgehend von Verletzungen (Standard-Test der Lackindustrie).

Untersuchung des Einflusses der Metallvorhandlung (Phosphatierung, Chromatierung etc.) auf die Unterwanderungsgeschwindigkeit.

Untersuchung des Einflusses von Zusätzen im Lack (Pigmenten, Inhibitoren) auf die Unterwanderungsgeschwindigkeit.

Untersuchung des Einflusses einer Polarisierung der Metalloberfläche (kathodischer Schutz, verzinkte Stahlbleche) auf die Unterwanderungsgeschwindigkeit.

Neben der Unterwanderungsgeschwindigkeit, die aus den Potentialprofilen resultiert, ist auch eine Feststellung möglicher Korrosionsreaktionen aus der absoluten Potentiallage möglich. So mag z.B. eine phosphatierte Stahloberfläche auch durch Wassereinlagerung unterwandert werden, während die Oberfläche keine Korrosion aufgrund der passivierenden Phosphatschicht zeigt.

Im folgenden wird die Erfindung unter Bezugnahme auf die Zeichnungen näher erläutert. Es zeigen:

Figur 1    eine schematische Blockdarstellung einer Einrichtung zum Untersuchen des Zustandes einer beschichteten Metalloberfläche gemäß einer bevorzugten Ausführungsform der Erfindung;

Figur 2    eine Schnittansicht des Meßsystems der Einrichtung gemäß Figur 1 und

Figur 3    eine vergrößerte Schnittansicht eines Meßkopfes des Meßsystems gemäß Figur 2.

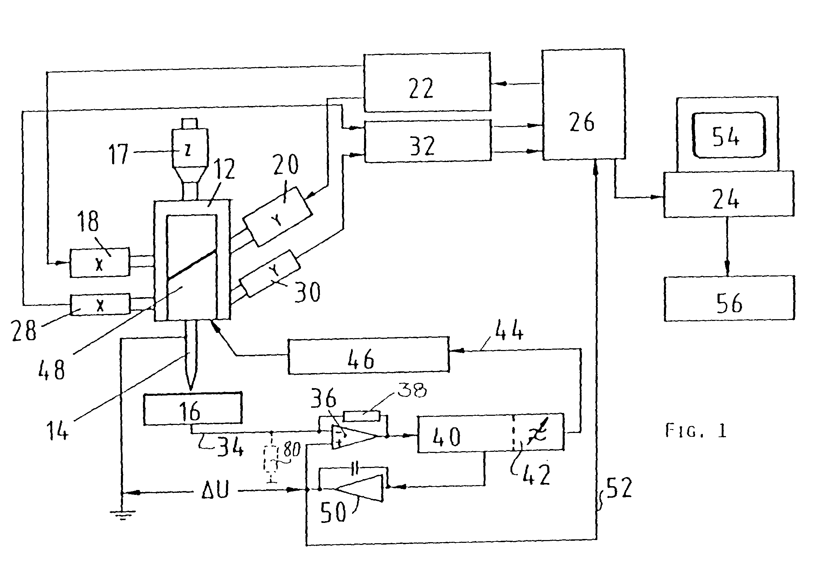

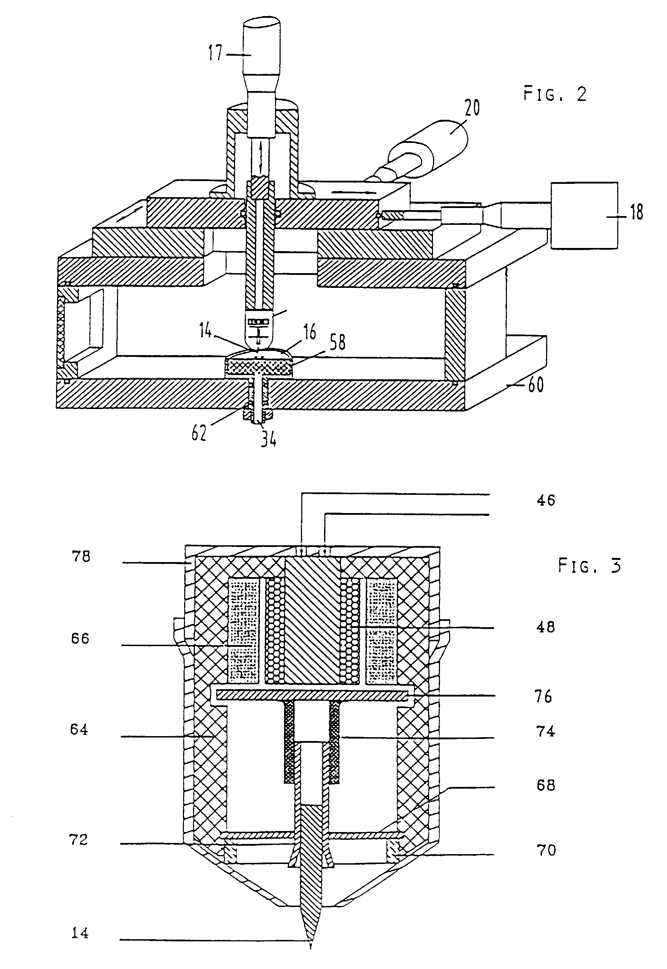

Die in Figur 1 dargestellte Einrichtung enthält ein Meßsystem 10, welches einen Meßkopf 12 zur schwingenden Lagerung einer Bezugselektrode ("Kelvin-Sonde") 14 enthält und zur Positionierung der Bezugselektrode bezüglich einer beschichteten Oberfläche eines Untersuchungsobjektes (Probe) 16 dient. Das Meßsystem und der Meßkopf werden anhand der Figuren 2 und 3 noch näher erläutert. Zur Positionierung der Bezugselektrode 14, die die Form eines spitz zulaufenden Stabes oder eine Nadel aufweist, in Z-Richtung dient eine Mikrometerschraube 17. Für die Positionierung der Bezugselektrode 14 in einer zur Probenoberfläche parallelen X-Y-Ebene dienen ein X-Schrittmotor 18 und ein Y-Schrittmotor 20, die mit einer Schrittmotorsteuerung 22 verbunden sind, welche ihrerseits durch einen Rechner 24 über eine Schnittstelle 26 gesteuert wird. Zur Positionsrückmeldung dienen ein X-Wegaufnehmer 28 sowie ein Y-Wegaufnehmer 30, deren Positionsausgangssignale dem Rechner 24 über Meßverstärker 32 und die Schnittstelle 26 zugeführt werden.

Das metallische Untersuchungsobjekt 16 ist durch eine in Figur 1 nicht dargestellte isolierte Halterung gehaltert und über eine Leitung 34 mit dem Minuseingang eines Differenzverstärkers 36 gekoppelt, dessen Ausgang über einen Gegenkopplungswiderstand 38 mit dem Pluseingang und außerdem mit einem Signaleingang eines Lock-in-Verstärkers 40 gekoppelt ist. Der Lock-in-Verstärker enthält einen frequenzveränderlichen Wechselspannungsgenerator 42, der eine frequenzveränderliche Bezugsspannung für den Verstärkerteil und über eine Ausgangsleitung 44 und einen Leistungsverstärker 46 eine Steuerspannung für eine Magnetspule 48 im Meßkopf 12 liefert.

Der Signalausgang des Lock-in-Verstärkers 40 ist mit dem Eingang eines Integrators 50 gekoppelt. Der Ausgang des Integrators ist einerseits mit dem Pluseingang des Differenzverstärkers 36 und andererseits über eine Leitung 52 mit einem Meßsignaleingang der Schnittstelle 26 verbunden. Der Rechner 24 ist mit einem Monitor 54 und einem Drucker 56 gekoppelt, die als Ausgabeeinrichtungen dienen.

Figur 2 zeigt ein mögliches Meßsystem im Schnitt. Bei dem dargestellten Ausführungsbeispiel werden scheibenförmige Proben 16 verwendet, die in einer isolierenden, becherförmigen Halterung 58 auf einer Grundplatte 60 gelagert sind. Die Grundplatte 60 weist eine isolierte Durchführung 62 für die Leitung 34 auf, die den Metallteil der Probe elektrisch mit dem Differenzverstärker 36 verbindet.

Der in Figur 3 vergrößert dargestellte Meßkopf 12 hat ein becherförmiges Kunststoffgehäuse 64, in dessen oberem Ende die Magnetspule 48 und ein Permanentmagnet 66 angeordnet sind. Im unteren Ende des Gehäuses 64 ist eine scheibenförmige Membrane 68 mit ihrem Umfang gehaltert und mit einem zur Erdung der Membrane dienenden Kontaktring 70 verbunden. Die Mitte der Membrane hat ein Loch, in dem eine rohrförmige, sich nach außen etwas erweiternde Halterung 72 aus vergoldetem Kupfer befestigt ist, die zur Halterung der Bezugselektrode 14 dient. Das innere Ende der Halterung 72 ist über ein Keramikrohr 74 mit einer weichmagnetischen Schwingankerplatte 76 verbunden.

Das Gehäuse 64 und die Bezugselektrode 14, mit Ausnahme ihrer Spitze, sind mit einer magnetischen Abschirmung in Form eines Mantels 78 aus einem hochpermeablen Magnetmaterial umgeben, der an Masse liegt und auch eine kapazitive Abschirmung bewirkt.

Die beschriebene Einrichtung arbeitet folgendermaßen: Der Wechselspannungsgenerator 42 des Verstärkers 40 wird auf die Resonanzfrequenz des die Bezugselektrode 14 enthaltenden schwingenden Systems 14-72-68-74-76 abgestimmt, so daß die Magnetspule 48 mit der Resonanzfrequenz dieses Systems erregt wird. Der permanentmagnetische Kern 66 bewirkt, daß der Anker 76 mit der Erregungsfrequenz der Magnetspule (und nicht mit dem Doppelten dieser Frequenz) angetrieben wird.

Die Spitze der schwingenden nadelförmigen Bezugselektrode 14 wird mittels der Mikrometerschraube 17 der Oberfläche der Beschichtung der Probe 16 genähert, bis auf der Leitung 34 ein Ausgangssignal ausreichender Amplitude auftritt. Dieses Ausgangssignal wird im Lock-in-Verstärker frequenzabhängig verstärkt, d.h. es wird nur diejenige Komponente des Ausgangssignales verstärkt, deren Frequenz mit der Frequenz der internen Bezugsspannung übereinstimmt, die vom Wechselspannungsgenerator 42 geliefert wird. Der Lock-in-Verstärker 40 liefert eine der Amplitude des verstärkten Ausgangssignals proportional unipolare Spannung, die durch den Integrator 50 integriert wird. Die durch den Integrator 50 erzeugte Spannung $\Delta U$ wird dem Bezugssignaleingang des Differenzverstärkers 36 sowie als Meßsignal dem Rechner 24 zugeführt.

Das Meßsignal $\Delta U$ entspricht in abgeglichenem Zustand des Regelkreises (Amplitude des verstärkten Ausgangssignals gleich Null) dem Korrosionspotential zwischen der an Masse liegenden Bezugselektrode 14 und der beschichteten, leitenden Grenzfläche unterhalb der Beschichtung in der Probe. Die diesbezügliche Leiterschleife führt von der Bezugselektrode 14 über Masse, einen gestrichelt angedeuteten Eingangswiderstand 80 des Differenzverstärkers 36, die Leitung 34 und den metallischen Teil der Probe 16 zu dessen untersuchter Oberfläche. Wie bekannt, heben sich alle Kontaktpotentiale heraus mit der Ausnahme des Korrosionspotentials zwischen der Bezugselektrode 14 und der ihr gegenüberliegenden beschichteten Oberfläche der Probe.

Die örtliche Auflösung ist um so größer, je kleiner der Radius der Spitze der Bezugselektrode ist und wird im wesentlichen durch die Streukapazität zwischen der sich an die Spitze anschließenden Flanke der Bezugselektrode und der Probenoberfläche beschränkt. Der Einfluß dieser Streukapazität kann dadurch weitestgehend ausgeschaltet werden, daß man die Komponente des Kapazitätssignales für die Messung heranzieht, deren Frequenz das Doppelte der Schwingungsfrequenz der Bezugselektrode ist. Dies läßt sich wie folgt erklären: Die Kapazität zwischen der Bezugselektrode 14 und der Probe 16 ist proportional zu 1/d, wobei d den Abstand zwischen der Bezugselektrode und der Probenoberfläche bedeutet. Wenn sich der Abstand d infolge der Schwingung der Bezugselektrode 14 sinusförmig ändert, ist der Verlauf der Kapazitätsänderung für solche Teile der Bezugselektrode, wie die Flanken, die relativ weit von der Probenoberfläche entfernt sind, sehr ähnlich einer Sinusfunktion. Hingegen weicht der Verlauf der Kapazität bei sehr kleinen Werten von d, also für die Spitze der Bezugselektrode 14 stark von dem einer Sinusfunktion ab, da bei sehr kleinen Werten von d die Kapazität überproportional ansteigt.

Der zwischen der Bezugselektrode und Masse fließende Wechselstrom ist durch die Ableitung der Funktion 1/d gegeben, also

$$i = dQ/dt,$$

wobei Q die Ladung im Kondensator bedeutet, die eine inverse Funktion von d ist. Für die Flanken der Bezugselektrode ergibt sich daher ein Strom entsprechend eine Cosinusfunktion mit der gleichen Frequenz 1f wie die Grundschwingung der Bezugselektrode. Der Strom, der durch die Spitze der Bezugselektrode hervorgerufen wird, zeigt dagegen ein völlig andersartiges Verhalten.

Da der Verlauf der Kapazität zwischen der Spitze der Bezugselektrode und der Probe extrem von dem einer Sinusfunktion abweicht, hat auch der Meßstrom keinen cosinusförmigen Verlauf sondern eine komplexe Form, die sich jedoch durch die Überlagerung einer Sinusfunktion der Frequenz 1f und einer solchen der Frequenz 2f annähern läßt. Der 2f-Anteil des Stromes, also der Anteil der doppelten Schwingungsfrequenz der Bezugselektrode, wird um so größer, je geringer der Abstand zwischen der Spitze der Bezugselektrode und der Probenoberfläche ist.

Der Anteil des Stromes, dessen Frequenz gleich der Schwingungsfrequenz 1f der Bezugselektrode ist, wird also im wesentlichen durch die Flanken der Bezugselektrode und nur zu einem geringen Teil durch die Spitze der Bezugselektrode hervorgerufen. Erfolgt die Analyse im Lock-in-Verstärker 40 auf der Basis der Bezugselektroden-Schwingungsfrequenz 1f, so ist die laterale Auflösung wegen der störenden Kapazität der Flanken der Bezugselektrode relativ gering, z.B. 100 µm, die Empfindlichkeit der Potentialmessung aber groß, da die Signale wegen der großen Flächen der Flanken der Bezugselektrode entsprechend groß sind. Erfolgt die Analyse des Meßsignals im Lock-in-Verstärker dagegen mit 2f, d.h. der ersten Oberwelle der Schwingungsfrequenz der Bezugselektrode, so ist die örtliche Auflösung sehr viel besser, also beispielsweise 10 um, da der Anteil des Stromes, dessen Frequenz gleich dem Doppelten der Schwingungsfrequenz der Bezugselektrode ist, ausschließlich durch die Spitze der Bezugselektrode hervorgerufen wird. Die Empfindlichkeit der Potentialmessung ist in diesem Falle allerdings geringer, da die Fläche der Nadelspitze verschwindend gering ist.

Eine Analyse mit der doppelten Schwingungsfrequenz 2f hat außerdem noch den Vorteil, daß elektromagnetische Störungen durch die Magnetspule, deren Frequenz 1f ist, weitgehend ausgeschaltet werden.

Das erfindungsgemäße Verfahren ist in der Lage, Korrosionspotentiale durch ein isolierendes Dielektrikum, wie eine Polymerbeschichtung, hindurch mit hoher Ortsauflösung zu bestimmen. Die zu untersuchende Oberfläche wird durch geeignete XY-Bewegung der Bezugselektrode bezüglich der Probenoberfläche mittels der Schrittmotoren 18 und 20 abgetastet.

Wird eine Polymerfilmbeschichtung ausgehend von einer lokalen Beschädigung von Wasser unterwandert, wobei die Dicke des Wasserfilms nur wenige Monolagen umfassen mag, so ändert sich das Elektrodenpotential an der nun neu geschaffenen Phasengrenze Metall/Wasser erheblich gegenüber der zuvor vorliegenden Phasengrenze Metall/Polymer. Diese fortschreitende Unterwanderung kann mit Hilfe der hochauflösenden Kelvin-Sonde leicht verfolgt werden. Die Delaminationsfront ist durch einen Potentialsprung gekennzeichnet, wobei die negativen Korrosionspotentiale den enthafteten Stellen und die positiven Potentiale der noch intakten Phasengrenze zuzuordnen sind. Durch Messung des fortschreitenden Potentialsprunges läßt sich also die Unterwanderungsgeschwindigkeit einfach ermitteln. Auch eine lokale Korrosion unter einer intakten Beschichtung läßt sich einfach und eindeutig erfassen, da die Bereiche, an denen die Oberfläche korrodiert ist und keine einwandfreie Haftung zwischen Metall und Beschicht vorliegt, deutlich negativere Potentiale aufweisen als Grenzflächen mit gutem Kontakt zwischen Metall und Beschichtung.

Die nadelförmige Bezugselektrode 14 besteht bei dem beschriebenen Ausführungsbeispiel aus einem Chrom-Nickel-Draht, an dessen Vorderende durch Ätzen eine sehr scharfe Spitze gebildet worden war. Es können jedoch auch andere Metalle, wie Wolfram, Molybdän, Edelmetalle etc. verwendet werden. Bei Verwendung einer spitz zulaufenden, nadelförmigen Bezugselektrode ist eine Ortsauflösung in der Größenordnung von 10 um erreichbar. Wenn keine so hohe Ortsauflösung erforderlich ist, kann eine Bezugselektrode mit abgerundetem oder abgeflachtem Vorderende verwendet werden. Bei vorgegebenem Abstand Sondenende-Metalloberfläche ergeben sich bei solchen Bezugselektrodenkonfigurationen höhere Ausgangssignale.

Die Schwingungen der Bezugselektrode können auch durch ein piezoelektrisches Element erzeugt werden. Anstelle des Lock-in-Verstärkers können auch andere frequenzselektive Schaltungen verwendet werden.

## Patentansprüche

1. Verfahren zum Untersuchen des Zustandes einer mit einem festen Material beschichteten Metalloberfläche, **dadurch gekennzeichnet,** daß das Korrosionspotential zwischen der beschichteten Metalloberfläche und einer Bezugselektrode berührungslos kapazitiv gemessen wird.

2. Verfahren nach Anspruch 1, **gekennzeichnet durch** die Verwendung einer Einrichtung mit den folgenden Merkmalen:

   - eine Halterung (58) für eine Probe (16),
   - eine Bezugselektrode (14),
   - eine Vorrichtung (17, 18, 20) zum Positionieren der Bezugselektrode (14) bezüglich einer zu untersuchenden Oberfläche der Probe (16),
   - einen Schwingantrieb (48, 76) zum Erzeugen einer Schwingbewegung zwischen der Bezugselektrode (14) und der Oberfläche der Probe (16), und
   - eine Schaltungsanordnung (36, 40, 50) zum Erfassen der Potentialdifferenz zwischen der Bezugselektrode (14) und der Probe (16).

## Claims

1. Method of investigating the condition of a metal surface coated with a solid material, characterised in that the corrosion potential between the coated metal surface and a reference electrode is capacitively measured without contact.

2. Method according to claim 1, characterised by the use of a device with the following features:

   - a retaining means (58) for a sample (16),

   - a reference electrode (14),

   - a device (17, 18, 20) for positioning the reference electrode (14) with respect to a surface to be tested of the sample (16),

   - a vibratory drive (48, 76) for generating a vibratory movement between the reference electrode (14) and the surface of the sample (16), and

   - a circuit arrangement (36, 40, 50) for detecting the potential difference between the reference electrode (14) and the sample (16).

## Revendications

1. Procédé de contrôle de l'état d'une surface métallique revêtue d'un matériau solide caractérisé en ce qu'on mesure d'une manière capacitive, sans contact, le potentiel de corrosion entre la surface métallique revêtue et une électrode de référence.

2. Procédé suivant la revendication 1 caractérisé en ce qu'on utilise un dispositif comportant les composants suivants, à savoir une monture (58) pour une éprouvette (16), une électrode de référence (14), un dispositif (17,18,20) pour mettre en position l'électrode de référence (14) par rapport à une surface de l'éprouvette (16) devant être contrôlée, un générateur d'oscillations (48,76) pour produire un mouvement oscillatoire entre l'électrode de référence (14) et la surface de l'éprouvette (16), et un circuit (36,40,50) pour détecter la différence de potentiel entre l'électrode de référence (14) et l'éprouvette (16).

Fig. 1

FIG. 2

FIG. 3